# EUROPEAN PATENT APPLICATION

(11) **EP 4 174 982 A1**
(43) Date of publication of application: **03.05.2023**
(21) Application number: 21830205.7
(22) Date of filing: 16.06.2021
(51) Int. Cl.: H01M 4/134, H01M 4/36, H01M 4/38

(54) **NEGATIVE ELECTRODE FOR NON-AQUEOUS ELECTROLYTE SECONDARY BATTERY, AND NON-AQUEOUS ELECTROLYTE SECONDARY BATTERY**

(30) Priority: 25.06.2020 JP 2020109746
(71) Applicant: SANYO Electric Co., Ltd., Daito-shi Osaka 574-8534 (JP)
(72) Inventor: GEJO, Tsukasa, Osaka.shi, Osaka 540-6207 (JP)
(74) Representative: Novagraaf International SA
(86) International application number: PCT/JP2021/022950
(87) International publication number: WO 2021/261358

(57) **Abstract**

The purpose of the present disclosure is to provide a negative electrode that achieves both favorable battery capacity and favorable charge/discharge cycle characteristics. An electrode for a non-aqueous electrolyte secondary battery, which is an example of an embodiment, has a belt-shaped negative electrode current collector and a negative electrode mixture layer formed on the surface of the negative electrode current collector. The negative electrode mixture layer contains a first Si-based active material and a second Si-based active material, each of which has a structure in which Si particles are dispersed in an oxide phase. The Si particle content in the first Si-based active material is higher than the Si particle content in the second Si-based active material, and, in the negative electrode mixture layer, the ratio of the mass of the first Si-based active material to the total mass of the first Si-based active material and the second Si-based active material is greater at the center than at the end in the width direction of the negative electrode current collector.

## Description

### TECHNICAL FIELD

The present disclosure relates to a negative electrode for a non-aqueous electrolyte secondary battery and a non-aqueous electrolyte secondary battery, and more particularly to a negative electrode for a non-aqueous electrolyte secondary battery including a Si-based active material and a non-aqueous electrolyte secondary battery.

### BACKGROUND ART

For a negative electrode active material for a non-aqueous electrolyte secondary battery, Si-based active materials containing silicon (Si) and carbon-based active materials such as graphite are used. The Si-based active materials are known to be capable of intercalating more lithium ions per unit mass than the carbon-based active materials such as graphite do. In particular, a Si-based active material in which Si particles are dispersed in an oxide phase including silicon oxide or lithium silicate is suitable for the negative electrode active material of the non-aqueous electrolyte secondary battery, due to a smaller change in volume with intercalation of lithium ions as compared with the case of using Si alone. For example, Patent Literature 1 discloses a negative electrode active material composed of silicon oxide represented by SiOₓ (0.5 ≤ x < 1.6) and a silicon-lithium silicate composite in which a silicon phase is dispersed in a lithium silicate phase represented by Li_{2z}SiO_{(2+z)} (0 < z < 2).

### CITATION LIST

### PATENT LITERATURE

PATENT LITERATURE 1: International Publication No. 2019/142744

### SUMMARY

### TECHNICAL PROBLEM

In a non-aqueous electrolyte secondary battery such as a lithium-ion battery, a high charge-discharge efficiency, which is a ratio of a discharge capacity to a charge capacity, is required to be maintained even after repeated charges and discharges. Improvement of this charge-discharge cycle characteristics is an important object, and in particular, improvement of the charge-discharge cycle characteristics with higher capacity has been required. In the art disclosed in Patent Literature 1, achievement of both the battery capacity and the charge-discharge cycle characteristics is not considered, and the art still has room for improvement.

It is an advantage of the present disclosure to provide a negative electrode that achieve both the battery capacity and the charge-discharge cycle characteristics.

### SOLUTION TO PROBLEM

A negative electrode for a non-aqueous electrolyte secondary battery of an aspect of the present disclosure has: a band-shaped negative electrode current collector; and a negative electrode mixture layer formed on a surface of the negative electrode current collector. The negative electrode mixture layer includes a first Si-based active material and a second Si-based active material, both the first Si-based active material and the second Si-based active material have a structure in which Si particles are dispersed in an oxide phase, and a content rate of the Si particles in the first Si-based active material is higher than a content rate of the Si particles in the second Si-based active material, and in the negative electrode mixture layer, a proportion of a mass of the first Si-based active material to a total mass of the first Si-based active material and the second Si-based active material is larger in a central part than in an end part in a width direction of the negative electrode current collector.

A non-aqueous electrolyte secondary battery of an aspect of the present disclosure comprises: the above negative electrode for a non-aqueous electrolyte secondary battery; a positive electrode; and a non-aqueous electrolyte.

### ADVANTAGEOUS EFFECT OF INVENTION

According to the negative electrode of an aspect of the present disclosure, a non-aqueous electrolyte secondary battery that achieves both the battery capacity and the charge-discharge cycle characteristics can be provided.

### BRIEF DESCRIPTION OF DRAWINGS

FIG. 1 is an axial sectional view of a cylindrical secondary battery of an example of an embodiment.
FIG. 2 is a sectional view schematically illustrating a first Si-based active material and a second Si-based active material in an example of an embodiment.
FIG. 3 is a front view of a negative electrode of an example of an embodiment.

### DESCRIPTION OF EMBODIMENTS

Hereinafter, an example of an embodiment of a non-aqueous electrolyte secondary battery according to the present disclosure will be described in detail. Hereinafter, a cylindrical battery housing a wound electrode assembly in a cylindrical battery case will be exemplified, but the electrode assembly is not limited to the wound electrode assembly, and may be a stacked electrode assembly in which a plurality of positive electrodes and a plurality of negative electrodes are alternately stacked with a separator interposed therebetween. The shape of the battery case is not limited to the cylindrical shape, and may be, for example, a rectangular shape, a coin shape, or the like, and the battery case may be a pouch composed of laminated sheets including a metal layer and a resin layer.

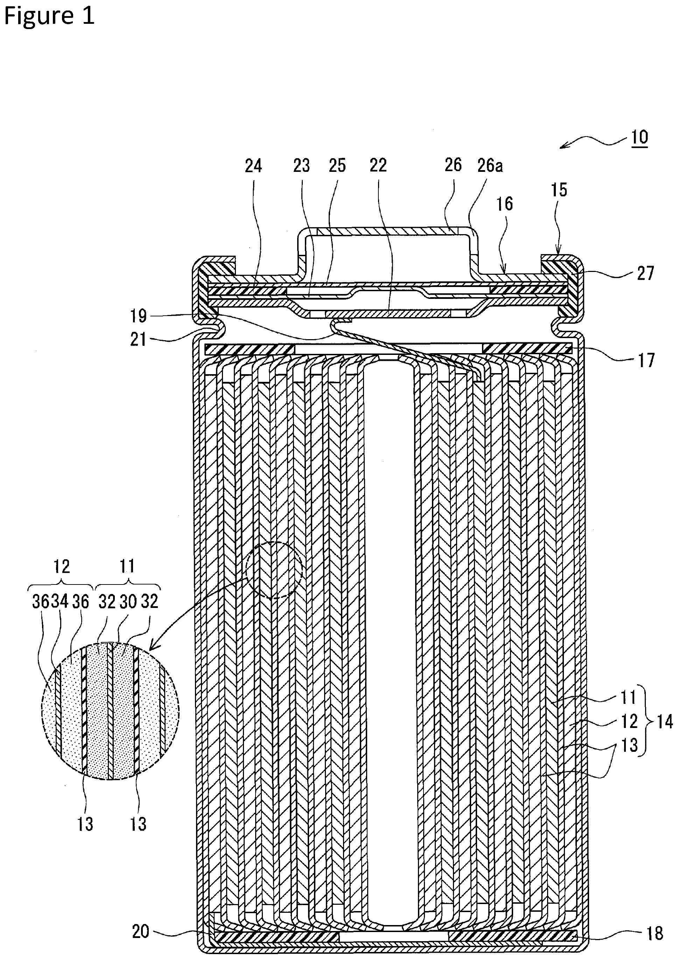

FIG. 1 is an axial sectional view of a cylindrical secondary battery 10 of an example of an embodiment. In the secondary battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound with a separator 13 interposed therebetween. Hereinafter, for convenience of description, a sealing assembly 16 side will be described as the "upper side", and the bottom side of the exterior 15 will be described as the "lower side".

An opening end of the upper part of the exterior 15 is capped with the sealing assembly 16 to seal inside the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through an outside of the insulating plate 18 toward the bottom side of the exterior 15, and is welded to a bottom inner face of the exterior 15. In the secondary battery 10, the exterior 15 becomes a negative electrode terminal.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a groove 21 formed by, for example, pressing the side wall thereof from the outside to support the sealing assembly 16. The groove 21 is preferably formed in a circular shape along a circumferential direction of the exterior 15, and supports the sealing assembly 16 with the gasket 27 interposed therebetween and with the upper face of the groove 21.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected each other. The lower vent member 23 and the upper vent member 25 are connected each other at each of centers thereof, and the insulating member 24 is interposed between each of the circumference of the vent members 23 and 25. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through an opening 26a of the cap 26.

Hereinafter, the positive electrode 11, the negative electrode 12, the separator 13, and the non-aqueous electrolyte, which constitute the secondary battery 10, particularly a negative electrode active material included in a negative electrode mixture layer constituting the negative electrode 12, will be described in detail.

### [Positive Electrode]

The positive electrode 11 has a band-shaped positive electrode current collector and a positive electrode mixture layer formed on a surface of the positive electrode current collector. As illustrated in FIG. 1, the positive electrode 11 may have the positive electrode mixture layers 32 on both surfaces of the positive electrode current collector 30. For the positive electrode current collector 30, a foil of a metal stable within a potential range of the positive electrode 11, such as aluminum, a film in which such a metal is disposed on a surface layer thereof, and the like may be used. The positive electrode mixture layer 32 may include, for example, a positive electrode active material, a binder, a conductive agent, and the like. The positive electrode 11 may be produced by, for example, applying a positive electrode mixture slurry including the positive electrode active material, the conductive agent, the binder, and the like onto the positive electrode current collector 30, followed by drying and then compressing to form the positive electrode mixture layer 32.

Examples of the positive electrode active material include a lithium-transition metal composite oxide containing a transition metal element such as Co, Mn, and Ni. Examples of the lithium-transition metal composite oxide include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F, wherein M represents at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3. These composite oxides may be used singly, and a plurality of types thereof may be mixed to be used. In terms of increase in the capacity of the non-aqueous electrolyte secondary battery, the positive electrode active material preferably includes a lithium-nickel composite oxide such as LiₓNiO₂, LiₓCo_{y}Ni_{1-y}O₂, and LiₓNi_{1-y}MyO_{z}, wherein M represents at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3. On a particle surface of the lithium-transition metal composite oxide, inorganic compound particles such as aluminum oxide and a lanthanoid-containing compound may adhere.

Examples of the conductive agent included in the positive electrode mixture layer 32 include carbon materials such as carbon black (CB), acetylene black (AB), Ketjenblack, and graphite. These materials may be used singly, and may be used in combination of two or more thereof.

Examples of the binder included in the positive electrode mixture layer 32 include fluororesins such as polytetrafluoroethylene (PTFE) and polyvinylidene fluoride (PVdF), polyacrylonitrile (PAN), a polyimide (PI), an acrylic resin, and a polyolefin resin. These materials may be used singly, and may be used in combination of two or more thereof. These resins may be used in combination with carboxymethylcellulose (CMC) or a salt thereof, polyethylene oxide (PEO), and the like.

### [Negative Electrode]

The negative electrode 12 has a band-shaped negative electrode current collector and a negative electrode mixture layer formed on a surface of the negative electrode current collector. As illustrated in FIG. 1, the negative electrode 12 may have the negative electrode mixture layers 36 on both surfaces of the negative electrode current collector 34. For the negative electrode current collector 34, a foil of a metal stable within a potential range of the negative electrode 12, such as copper, a film in which such a metal is disposed on a surface layer, and the like may be used. The negative electrode mixture layer 36 may include, for example, a negative electrode active material, a binder, and the like.

For the binder included in the negative electrode mixture layer 36, fluororesins such as PTFE and PVdF, PAN, PI, an acrylic resin, a polyolefin resin, and the like may be used similar to that in the positive electrode 11, but styrene-butadiene rubber (SBR) is preferably used. The negative electrode mixture layer may include CMC or a salt thereof, polyacrylic acid (PAA) or a salt thereof, polyvinyl alcohol (PVA), and the like.

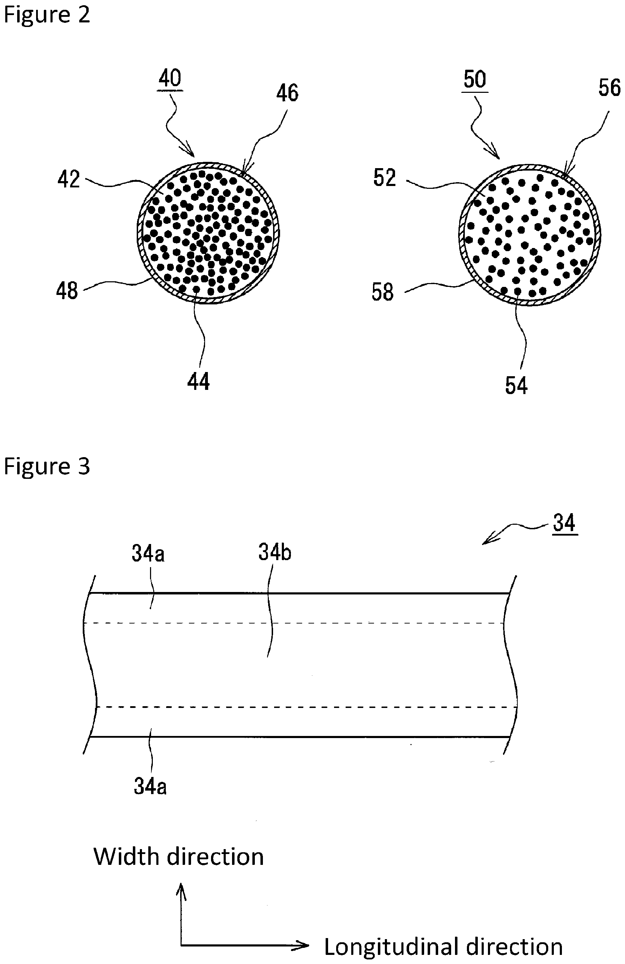

The negative electrode mixture layer 36 includes, as the negative electrode active material, a first Si-based active material 40 and a second Si-based active material 50 as exemplified in FIG. 2 (hereinafter, the first Si-based active material and the second Si-based active material may be collectively referred to as the Si-based active material). The first Si-based active material 40 includes at least an oxide phase 42 and Si particles 44, and has a structure in which the Si particles 44 are dispersed in the oxide phase 42. The first Si-based active material 40 may further include a conductive coating 48 covering surfaces of base particles 46 composed of the oxide phase 42 and the Si particles 44. Similarly, the second Si-based active material 50 includes at least an oxide phase 52 and Si particles 54, and has a structure in which the Si particles 54 are dispersed in the oxide phase 52. The second Si-based active material 50 may further include a conductive coating 58 covering surfaces of base particles 56 composed of the oxide phase 52 and the Si particles 54.

The Si particles 44 and 54 may be substantially uniformly dispersed in the oxide phases 42 and 52, respectively. That is, the base particles 46 and 56 have a sea-island structure in which the fine Si particles 44 and 54 are dispersed in the oxide phases 42 and 52, respectively. The Si particles 44 and 54 may be scatteringly present substantially uniformly on any cross section without uneven distribution in a part thereof. Average particle diameters of the Si particles 44 and 54 are preferably 200 nm or less, and more preferably 100 nm or less. The average particle diameters of the Si particles 44 and 54 are measured by observing a cross section of the negative electrode mixture layer by using a scanning electron microscope (SEM) or a transmission electron microscope (TEM). Specifically, the average particle diameters are determined by measuring diameters of circumscribed circles of random 100 particles selected from SEM or TEM images to average the measured value.

The oxide phases 42 and 52 may contain a metal oxide containing at least Si as a main component (component at the most mass). The oxide phases 42 and 52 may be constituted by aggregation of finer particles than the Si particles 44 and 54. The oxide phases 42 and 52 may contain, for example, at least one of Li, Si, Al, and B.

Before a first charge, the oxide phases 42 and 52 may contain at least one of lithium silicate and silicon oxide as the main component. The lithium silicate is preferably represented by, for example, Li_{2z}SiO_{(2+z)} (0 < z < 2). The lithium silicate preferably contains Li₂SiO₃ (z=1) or Li₂Si₂O₅ (z=1/2) as the main component from the viewpoint of stability, easiness of production, lithium-ion conductivity, and the like. When Li₂SiO₃ or Li₂Si₂O₅ is the main component, a content of the main component is preferably more than 50 mass%, more preferably 80 mass% or more, and may be substantially 100 mass%, based on the total mass of the oxide phases 42 and 52. The silicon oxide may be, for example, silicon dioxide (SiO₂). When the oxide phases 42 and 52 contain silicon dioxide as the main component, the Si-based active materials 40 and 50 have, for example, a structure in which the Si particles 44 and 54 are dispersed in an amorphous SiO₂ matrix, and represented by SiOₓ (0.5 ≤ x ≤ 1.5). SiO₂ changes into mainly Li₄SiO₄ with the first charge.

The oxide phases 42 and 52 before the first charge may be both the lithium silicate phase or may be both the silicon oxide phase; however, preferably, the oxide phase 42 contains lithium silicate as the main component and the oxide phase 52 contains silicon oxide as the main component. That is, the first Si-based active material 40 is of preferably particles in which the Si particles 44 are dispersed in the lithium silicate phase, and the second Si-based active material 50 is of preferably particles in which the Si particles 54 are dispersed in the silicon oxide phase. In this case, the effect of improving the charge-discharge cycle characteristics of the battery becomes more remarkable.

A content rate of the Si particles 44 in the first Si-based active material 40 is larger than a content rate of the Si particles 54 in the second Si-based active material 50. Here, the content rate of the Si particles 44 in the first Si-based active material 40 means a proportion of a mass of the Si particles 44 to a mass of the base particles 46, and is preferably 40 mass% to 70 mass%, and more preferably 40 mass% to 60 mass%. The content rate of the Si particles 54 in the second Si-based active material 50 means a proportion of a mass of the Si particles 54 to a mass of the base particles 56, and is preferably 20 mass% to 40 mass%, and more preferably 25 mass% to 35 mass%. For example, the content rate of the Si particles 44 in the first Si-based active material 40 may be 40 mass% or more, and the content rate of the Si particles 54 in the second Si-based active material 50 may be less than 40 mass%.

The Si-based active materials 40 and 50 may be composed of only the base particles 46 and 56, respectively, and may have the conductive coatings 48 and 58 composed of a material having higher conductivity than the oxide phases 42 and 52 on the surfaces of the base particles 46 and 56, respectively. The conductive material constituting the conductive coatings 48 and 58 may be, for example, at least one selected from the group consisting of a carbon material, a metal, and a metal compound, and a carbon material is preferably used. Examples of a method for carbon-coating the surfaces of the base particles 46 and 56 include: a CVD method using acetylene, methane, and the like; and a method of mixing a coal pitch, petroleum pitch, a phenol resin and the like with the base particles 46 and 56 to be heat-treated. A conductive agent such as carbon black and Ketjenblack may be adhered to the surfaces of the base particles 46 and 56 using a binder to form the carbon coating layer.

The conductive coatings 48 and 58 may be formed with covering substantially the entire regions of the surfaces of the base particles 46 and 56. Thicknesses of the conductive coatings 48 and 58 are preferably 1 nm to 200 nm, and more preferably 5 nm to 100 nm with considering achievement of the conductivity and dispersity of lithium ions toward the base particles 46 and 56. If the conductive coatings 48 and 58 are excessively thin, the conductivity is lowered, and uniformly covering the base particles 46 and 56 becomes difficult. Meanwhile, if the conductive coatings 48 and 58 are excessively thick, the dispersion of lithium ions toward the base particles 46 and 56 is inhibited to tend to decrease the capacity. The thicknesses of the conductive coatings 48 and 58 may be measured by observing a cross section of the particles using an SEM or a TEM.

A median diameter (D50) on a volumetric basis of the first Si-based active material 40 and a D50 of the second Si-based active material 50 may be, for example, 2 µm to 20 µm. Here, the median diameter (D50) on a volumetric basis, also referred to as a 50% particle diameter or a median diameter, means a particle diameter at which a volumetric integrated value is 50% in a particle size distribution measured by a laser diffraction scattering method. The D50 of the first Si-based active material 40 may be larger than the D50 of the second Si-based active material 50. In this case, the D50 of the first Si-based active material 40 is preferably 7 µm to 20 µm, and more preferably 8 µm to 15 µm. The D50 of the second Si-based active material 50 is preferably 2 µm to 7 µm, and more preferably 3 µm to 6 µm. The D50s of the Si-based active materials 40 and 50 may be smaller than a D50 of a carbon-based active material, described later.

The Si-based active materials 40 and 50 may be produced via, for example, the following steps 1 to 3.
(1) Si particles and an inorganic compound containing Si, such as lithium silicate and silicon oxide, are mixed at a predetermined mass ratio. This inorganic compound becomes the oxide phases 42 and 52. When the first Si-based active material 40 is produced, the mixing ratio of the Si particles is higher than that of a case when the second Si-based active material 50 is produced.
(2) The above raw material powder is crushed and mixed by using a ball mill or the like under an inert atmosphere, and then heat-treated (sintered) at, for example, 500°C to 700°C. The sintered product is crushed and classified so as to have a predetermined range of D50 to obtain the base particles 46 and 56 in which the Si particles 44 and 54 are dispersed in the oxide phase 42 and 52.
(3) Thereafter, the base particles 46 and 56 are mixed with a carbon material, such as coal pitch, to be heat-treated under an inert atmosphere. These steps yield the Si-based active materials 40 and 50 in which the conductive coatings 48 and 58, such as the carbon coating, are formed on surfaces of the base particles 46 and 56.

Since the Si-based active materials 40 and 50 can intercalate more lithium ions than the carbon-based active material does, the Si-based active materials 40 and 50 may be used for the negative electrode active material to increase the battery capacity. Since the Si-based active materials 40 and 50 have larger change in volume with charge and discharge than the carbon-based active material, the carbon-based active material and the Si-based active materials 40 and 50 are preferably used in combination.

For the carbon-based active material, graphite conventionally used for negative electrode active materials, such as: a natural graphite such as flake graphite, massive graphite, and amorphous graphite; and an artificial graphite such as massive artificial graphite (MAG) and meso-carbon microbead (MCMB) may be used, for example. A D50 of the graphite may be, for example 18 µm to 24 µm.

Contents of the Si-based active materials 40 and 50 are preferably 2 mass% to 20 mass%, more preferably 3 mass% to 15 mass%, and particularly preferably 4 mass% to 10 mass%, based on the total mass of the negative electrode active material. That is, a mixing ratio between the carbon-based active material and the Si-based active material is preferably 98:2 to 80:20, more preferably 97:3 to 85:15, and particularly preferably 96:4 to 90:10, at a mass ratio. When the mass ratio between the carbon-based active material and the Si-based active materials 40 and 50 is within the above range, the charge-discharge cycle characteristics are more remarkably improved easily with increasing the capacity.

Next, distribution of the negative electrode active material in the negative electrode mixture layer 36 formed on the surface of the negative electrode current collector 34 will be described with reference to FIG. 3. FIG. 3 is a front view of the negative electrode 12 of an example of an embodiment. End parts 34a are regions at both ends in the width direction of the band-shaped negative electrode current collector 34, and a central part 34b is a central region in the width direction of the negative electrode current collector. A ratio of a length in the width direction (hereinafter, referred to as the width) between one end part 34a, the central part 34b, and the other end part 34a may be, for example, 1:8:1 to 3:4:3.

In the negative electrode mixture layer 36, a proportion of a mass of the first Si-based active material 40 to a total mass of the first Si-based active material 40 and the second Si-based active material 50 is larger in the central part 34b than in the end part 34a. This allows the central part 34b, which has a lower negative electrode potential than the end part 34a due to repeated charges and discharges, to have a large amount of the first Si-based active material 40, leading to reduction of the charge-discharge depth of the first Si-based active material 40 for inhibiting a side reaction to improve the charge-discharge cycle characteristics. Although the first Si-based active material 40 with a higher content of the Si particles 44 is advantageous to the higher capacity, the expansion and contraction thereof are large during the charge and discharge, and the side reaction is likely to occur on the surface. The charge and discharge expand and contract the negative electrode 12 to repeatedly cause infiltration and ooze of the electrolyte liquid, and to cause concentration gradient of lithium ions in the electrolyte liquid along the width direction of the negative electrode current collector 34 inside the electrode assembly 14, leading to a higher concentration of lithium ions in the electrolyte liquid in the central part 34b than in the end part 34a. This concentration gradient of lithium ions rises the negative electrode potential during the charge and discharge in the end part 34a and lowers that in the central part 34b. Thus, disposing a large amount of the first Si-based active material 40 in the central part 34b where the side reaction hardly occurs may achieve both the higher capacity and the charge-discharge cycle characteristics.

The above negative electrode 12 may be produced via, for example, the following steps 1 to 3.
(1) The first Si-based active material 40 and the second Si-based active material 50 are mixed to prepare each of a Si-based active material A and a Si-based active material B. The Si-based active material A has a higher proportion of the mass of the first Si-based active material 40 to the total mass of the first Si-based active material 40 and the second Si-based active material 50. The Si-based active material B has a lower proportion thereof. The Si-based active material A may include substantially only the first Si-based active material, and the Si-based active material B may include substantially only the second Si-based active material.
(2) The Si-based active material A and the carbon-based active material are mixed at an appropriate proportion to prepare a negative electrode active material A. This negative electrode active material A, the binder, a thickener, and the like are mixed at an appropriate proportion to prepare a negative electrode mixture slurry A with water as a dispersion medium. Similarly, the Si-based active material B and the carbon-based active material are mixed at an appropriate proportion to prepare a negative electrode active material B. This negative electrode active material B, the binder, a thickener, and the like are mixed at an appropriate proportion to prepare a negative electrode mixture slurry B with water as a dispersion medium.
(3) The negative electrode 12 may be produced by, on the surface of the negative electrode current collector 34, applying the negative electrode mixture slurry A onto the central part 34b, followed by drying, and then applying the negative electrode mixture slurry B onto the end part 34a, followed by drying and then compressing to form the negative electrode mixture layer 36. The negative electrode mixture layer 36 may be formed by applying the negative electrode mixture slurry A, and then without drying, applying the negative electrode mixture slurry B, followed by drying and then compressing. Applying the negative electrode mixture slurry B onto the end part 34a and then applying the negative electrode mixture slurry A onto the central part 34b is also possible.

### [Separator]

For the separator 13, a porous sheet having an ion permeation property and an insulation property may be used. Specific examples of the porous sheet include a fine porous thin film, a woven fabric, and a nonwoven fabric. As a material for the separator 13, a polyolefin such as polyethylene and polypropylene, cellulose, and the like are preferable. The separator 13 may have any of a single-layered structure and a stacked structure. A heat-resistant layer and the like may be formed on a surface of the separator 13.

### [Non-Aqueous Electrolyte]

The non-aqueous electrolyte may include a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, and the like may be used, for example. The non-aqueous solvent may contain a halogen-substituted derivative in which hydrogen of these solvents is at least partially substituted with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the above esters include cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate.

Examples of the above ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {1 and m represent integers of 0 or more}. The lithium salts may be used singly, and a plurality of types thereof may be mixed to be used. Among them, LiPF₆ is preferably used from the viewpoints of ion conductivity, electrochemical stability, and the like. A concentration of the lithium salt may be, for example, 0.8 mol to 1.8 mol per litter of the non-aqueous solvent.

### EXAMPLES

Hereinafter, the present disclosure will be further described with Examples, but the present disclosure is not limited to these Examples.

### <Example>

### [Production of Positive Electrode]

As the positive electrode active material, a lithium nickelate containing cobalt and aluminum, represented by LiNi_{0.91}Co_{0.045}Al_{0.045}O₂, was used. This positive electrode active material, acetylene black (AB), and polyvinylidene fluoride (PVdF) were mixed at a mass ratio of 100:0.75:0.6 to prepare a positive electrode mixture slurry with N-methyl-2-pyrrolidone (NMP) as a dispersion medium. This positive electrode mixture slurry was applied on both surfaces of a band-shaped positive electrode current collector made of aluminum foil with a doctor blade method, the coating film was dried and then compressed with a roller to form positive electrode mixture layers on both surfaces of the positive electrode current collector. The positive electrode current collector on which the positive electrode mixture layers were formed was cut to a predetermined electrode size to produce a positive electrode.

### [Production of First Si-Based Active Material]

In an inert atmosphere, Si particles (3N, crushed product with 10 µm) and lithium silicate particles represented by Li_{2z}SiO_{(2+z)} (0 < z < 2) (crushed product with 10 µm) were mixed so that a content rate of the Si particles was 52 mass%, and the mixture was crush-treated with a ball mill. Then, the mixed powder was taken out in an inert atmosphere, and heat-treated under a condition under an inert atmosphere at 600°C for 4 hours. The heat-treated powder (hereinafter, referred to as the base particles) was crushed with a jet mill, and then mixed with coal pitch for heat-treating under a condition under an inert atmosphere at 800°C for 5 hours to form a conductive coating of carbon on surfaces of the base particles. The amount of coating with carbon was 2 mass% based on a total mass of the particles including the base particles and the conductive coating. The particles on which the conductive coating was formed was disintegrated and classified by using a sieve to obtain a first Si-based active material in which the Si particles were dispersed at a content rate of 52 mass% in a lithium silicate phase, and having a D50 of 11 µm.

### [Production of Second Si-Based Active Material]

In an inert atmosphere, Si particles (3N, crushed product with 10 µm) and silicon dioxide particles (crushed product with 10 µm) were mixed so that a content rate of the Si particles was 30 mass%, and the mixture was crush-treated with a ball mill. Then, the mixed powder was taken out in an inert atmosphere, and heat-treated under a condition under an inert atmosphere at 600°C for 4 hours. The heat-treated powder (hereinafter, referred to as the base particles) was crushed with a jet mill, and then a conductive coating of carbon was formed on surfaces of the base particles with a CVD method (1000°C). The amount of coating with carbon was 5 mass% based on a total mass of the particles including the base particles and the conductive coating. The particles on which the conductive coating was formed was disintegrated and classified by using a sieve to obtain a second Si-based active material in which the Si particles were dispersed at a content rate of 30 mass% in a silicon dioxide phase, and having a D50 of 5 µm.

### [Analysis of Si-Based Active Material]

A cross section of the particle of the Si-based active material was observed with an SEM, and it was consequently confirmed that the Si particles were substantially uniformly dispersed in the oxide phase in both of the Si-based active materials. In both of the Si-based active materials, the Si particles had an average particle diameter of less than 50 nm. The amount of coating with carbon was analyzed with a CS analyzer. The D50 of the Si-based active material was measured by using a laser diffraction-type particle size distribution measuring device (SALD-2000A, manufactured by SHIMADZU CORPORATION). The measurement was performed by using water as a dispersion medium, and a refractive index of the particles was set to be 1.70-0.01i.

### [Production of Negative Electrode]

Graphite having a D50 of 22 µm and the above first Si-based active material were mixed at a mass ratio of 91.7:8.3 to be used as a negative electrode active material A. The negative electrode active material A, carboxymethylcellulose (CMC), polyacrylic acid (PAA), and styrene-butadiene rubber (SBR) were mixed at a mass ratio of 100:1:1:1 to prepare a negative electrode mixture slurry A with water as a dispersion medium.

Graphite having a D50 of 22 µm and the above second Si-based active material were mixed at a mass ratio of 96.2:3.8 to be used as a negative electrode active material B. A negative electrode mixture slurry B was prepared in the same manner as of the negative electrode mixture slurry A except that the negative electrode active material B was used instead of the negative electrode active material A.

A negative electrode current collector made of copper foil was prepared, and an end part, a central part, and an end part were defined at a length ratio of 2:6:2 in the width direction. On the central parts on both surfaces of the negative electrode current collector, the negative electrode mixture slurry A was applied with a doctor blade method, the coating film was dried, then the negative electrode mixture slurry B was applied on both the end parts with a doctor blade method, the coating film was dried, and compressed with a roller to form negative electrode mixture layers on both surfaces of the negative electrode current collector. The negative electrode current collector on which the negative electrode mixture layers were formed was cut to a predetermined electrode size to produce a negative electrode.

### [Preparation of Non-Aqueous Electrolyte]

Into a mixed solvent in which ethylene carbonate (EC), ethyl methyl carbonate (EMC), and dimethyl carbonate (DMC) were mixed at a volume ratio (25°C, 1 atm) of 20:5:75, LiPF₆ was dissolved at a concentration of 1.3 mol/L. Furthermore, vinylene carbonate (VC) was dissolved into the above mixed solvent at a concentration of 4 mass% to prepare a non-aqueous electrolyte (electrolyte liquid).

### [Production of Secondary Battery]

An aluminum lead was attached to the positive electrode, a nickel lead was attached to the negative electrode, the positive electrode and the negative electrode were spirally wound with a separator made of polyethylene fine porous film interposed therebetween to produce a wound electrode assembly. This electrode assembly was housed in an exterior, and the nickel lead was welded with a bottom of the exterior. Then, the aluminum lead was welded with a sealing assembly, the above non-aqueous electrolyte was injected thereinto, and then an opening of the exterior was sealed with the sealing assembly to obtain a non-aqueous electrolyte secondary battery.

### <Comparative Example 1>

In the production of the negative electrode, graphite, the first Si-based active material, and the second Si-based active material were mixed at a mass ratio of 93.5:5:1.5 to be used as a negative electrode active material C. A negative electrode was produced and a non-aqueous electrolyte secondary battery was produced in the same manner as in Example except that the negative electrode active material C was used instead of the negative electrode active material A to prepare a negative electrode mixture slurry C, and that the negative electrode mixture slurry C was applied on the entire surface of the central part and both the end parts of the negative electrode current collector to form the negative electrode mixture layer.

### <Comparative Example 2>

In the production of the negative electrode, graphite and the second Si-based active material were mixed at a mass ratio of 97.5:2.5 to be used as a negative electrode active material D, and graphite and the first Si-based active material were mixed at a mass ratio of 87.5: 12.5 to be used as a negative electrode active material E. A negative electrode was produced and a non-aqueous electrolyte secondary battery was produced in the same manner as in Example except that the negative electrode active material D was used instead of the negative electrode active material A to prepare a negative electrode mixture slurry D, and that the negative electrode active material E was used instead of the negative electrode active material B to prepare a negative electrode mixture slurry E.

### <Comparative Example 3>

In the production of the negative electrode, graphite and the second Si-based active material were mixed at a mass ratio of 94:6 to be used as a negative electrode active material F. A negative electrode was produced and a non-aqueous electrolyte secondary battery was produced in the same manner as in Example except that the negative electrode active material F was used instead of the negative electrode active material A to prepare a negative electrode mixture slurry F, and that the negative electrode mixture slurry F was applied on the entire surface of the central part and both the end parts of the negative electrode current collector to form the negative electrode mixture layer.

An initial discharge capacity and charge-discharge cycle characteristics of each of the above batteries were evaluated with the following methods. On the charge-discharge cycle characteristics, the number of cycles at which a discharge capacity plummeted was used as an indicator. Shown is a relative value of each battery relative to the number of cycles at which the discharge capacity plummeted in Example being 100. Table 1 shows: compositions (mass ratio) of the negative electrode active material in the end part and central part of the negative electrode; and an average composition in the entire negative electrode mixture layer, together with the evaluation results.

### [Evaluation of Initial Discharge Capacity]

Under a temperature environment of 25°C, each of the batteries of Example and Comparative Examples was charged at a constant current of 0.3 C until a battery voltage reached 4.2 V, charged at a constant voltage of 4.2 V until a current value reached 1/50 C, and then discharged at a constant current of 0.5 C until the battery voltage reached 2.85 V. A discharge capacity at this time was specified as the initial discharge capacity.

### [Evaluation of Charge-Discharge Cycle Characteristics]

Under a temperature environment of 25°C, each of the batteries of Example and Comparative Examples was charged at a constant current of 0.3 C until a battery voltage reached 4.2 V, then charged at a constant voltage of 4.2 V until a current value reached 1/50 C, and thereafter discharged at a constant current of 0.5 C until the battery voltage reached 2.85 V. This was set as one charge-discharge cycle. A charge-discharge efficiency, which was a ratio of a discharge capacity to a charge capacity, was calculated in every cycle, and the number of cycles when the charge-discharge efficiencies were less than 99.8% in consecutive five cycles was specified as the number of cycles at which a discharge capacity plummeted. A battery having a large number of cycles at which a discharge capacity plummets, which maintains high charge-discharge efficiency, has good charge-discharge cycle characteristics.

**Table 1**

| | Composition of negative electrode mixture layer (mass ratio) | | | Evaluation results | |
|---|---|---|---|---|---|
| | Average (graphite / lithium silicate / silicon oxide) | Central part (graphite / lithium silicate / silicon oxide) | End part (graphite / lithium silicate / silicon oxide) | Initial discharge capacity [mAh] | Number of cycles at which discharge capacity plummets |
| Example | 93.5/5/1.5 | 91.7/8.3/0 | 96.2/0/3.8 | 3348 | 100 |
| Comparative Example 1 | 93.5/5/1.5 | | | 3348 | 50 |
| Comparative Example 2 | 93.5/5/1.5 | 97.5/0/2.5 | 87.5/12.5/0 | 3348 | 30 |
| Comparative Example 3 | 94/0/6 | | | 3250 | 100 |

As shown in Table 1, the battery of Example has excellent charge-discharge cycle characteristics compared with the batteries of Comparative Examples 1 and 2, and exhibits higher capacity than Comparative Example 3. As above, the batteries of Comparative Examples 1 to 3 have insufficient one of the battery capacity and the charge-discharge cycle characteristics; on the other hand, only the battery of Example achieves both the battery capacity and the charge-discharge cycle characteristics. That is, required for the achievement of both the battery capacity and the charge-discharge cycle characteristics is not only merely mixing to use the two kinds of the Si-based active materials having different content rates of the Si particles (the first Si-based active material and the second Si-based active material) but also appropriately dispersing each thereof in the negative electrode mixture layer.

### REFERENCE SIGNS LIST

10 Secondary battery, 11 Positive electrode, 12 Negative electrode, 13 Separator, 14 Electrode assembly, 15 Exterior, 16 Sealing assembly, 17, 18 Insulating plate, 19 Positive electrode lead, 20 Negative electrode lead, 21 Groove, 22 Filter, 23 Lower vent member, 24 Insulating member, 25 Upper vent member, 26 Cap, 26a Opening, 27 Gasket, 30 Positive electrode current collector, 32 Positive electrode mixture layer, 34 Negative electrode current collector, 34a End part, 34b Central part, 36 Negative electrode mixture layer, 40 First Si-based active material, 50 Second Si-based active material, 42, 52 Oxide phase, 44, 54 Si particles, 46, 56 Base particles, 48, 58 Conductive coating

## Claims

1. A negative electrode for a non-aqueous electrolyte secondary battery, having:
a band-shaped negative electrode current collector; and
a negative electrode mixture layer formed on a surface of the negative electrode current collector, wherein
the negative electrode mixture layer includes a first Si-based active material and a second Si-based active material,
both the first Si-based active material and the second Si-based active material have a structure in which Si particles are dispersed in an oxide phase, and a content rate of the Si particles in the first Si-based active material is higher than a content rate of the Si particles in the second Si-based active material, and
in the negative electrode mixture layer, a proportion of a mass of the first Si-based active material to a total mass of the first Si-based active material and the second Si-based active material is larger in a central part than in an end part in a width direction of the negative electrode current collector.

2. The negative electrode for a non-aqueous electrolyte secondary battery according to claim 1, wherein, before a first charge, the oxide phase contains at least one of lithium silicate and silicon oxide as a main component.

3. The negative electrode for a non-aqueous electrolyte secondary battery according to claim 2, wherein, before the first charge,
the oxide phase of the first Si-based active material contains the lithium silicate as a main component, and
the oxide phase of the second Si-based active material contains the silicon oxide as a main component.

4. A non-aqueous electrolyte secondary battery, comprising:
the negative electrode according to any one of claims 1 to 3;
a positive electrode; and
a non-aqueous electrolyte.
